# EUROPEAN PATENT APPLICATION

(11) **EP 4 228 246 A1**
(43) Date of publication of application: **16.08.2023**
(21) Application number: 21919797.7
(22) Date of filing: 09.03.2021
(51) Int. Cl.: H04N 5/232, H04N 5/225, G06N 3/08

(54) **ELECTRONIC DEVICE CAPABLE OF AUTO-FOCUSING AND METHOD FOR OPERATING SAME**

(30) Priority: 12.01.2021 KR 20210004162
(71) Applicant: Samsung Electronics Co., Ltd., Suwon-si, Gyeonggi-do 16677 (KR)
(72) Inventor: SA, Seokwoon, Suwon-si Gyeonggi-do 16677 (KR); LEE, Sehyun, Suwon-si Gyeonggi-do 16677 (KR); KIM, Sungeun, Suwon-si Gyeonggi-do 16677 (KR); YEO, Dongwon, Suwon-si Gyeonggi-do 16677 (KR); WON, Jonghoon, Suwon-si Gyeonggi-do 16677 (KR); LEE, Kangmin, Suwon-si Gyeonggi-do 16677 (KR)
(74) Representative: Nederlandsch Octrooibureau
(86) International application number: PCT/KR2021/002869
(87) International publication number: WO 2022/154168

(57) **Abstract**

An electronic device according to an embodiment of this document, may include a camera module supporting an auto focus (AF) function, and at least one processor electrically connected to the camera module. The at least one processor may obtain a first image frame focusing on a first position from the camera module, obtain a second image frame following the first image frame from the camera module, perform deep learning on the first image frame and the second image frame, determine whether it is necessary to set the focus of the second image frame to a second position different from the first position based on a result of the deep learning, and control the AF function of the camera module according to the determination result.

## Description

### [Technical Field]

Various embodiments of the present disclosure relate to an electronic device for providing an automatic focus control function.

### [Background Art]

Recently, as functions of a mobile device are diversified, demand for improvement of an image capturing function using the mobile device is also increasing. Hence, an auto focus (AF) function for adjusting a focus in image capturing is developing.

A methods for driving the AF function includes contrast AF and phase AF. The contrast AF is a method of acquiring image frames while moving a lens, and detecting a lens position with the highest sharpness of the acquired image frame. The phase AF is a method of detecting the lens position based on two image frames acquired by separating incident light into a camera.

### [Disclosure of Invention]

### [Technical Problem]

According to a conventional auto focus (AF) function, an electronic device performs an AF operation even if there is no need to change a focus position. For example, a conventional electronic device may move a lens to adjust the focus even if illuminance of a surrounding environment changes but a subject position does not change. If the electronic device performs the AF operation more than necessary, a phenomenon in which a field of view of a preview image displayed on a display vibrates (e.g., wobbling) occurs. As another example, if capturing a subject with little texture information, such as the sky, the conventional electronic device performs the AF operation based on low-reliability contrast data (or phase data). If the electronic device excessively performs the AF operation according to the low reliability data, the wobbling phenomenon becomes worse.

### [Solution to Problem]

An electronic device according to an embodiment of this document, may include a camera module supporting an auto focus (AF) function, and at least one processor electrically connected to the camera module. The at least one processor may obtain a first image frame focusing on a first position from the camera module, obtain a second image frame following the first image frame from the camera module, perform deep learning on the first image frame and the second image frame, determine whether it is necessary to set the focus of the second image frame to a second position different from the first position based on a result of the deep learning, and control the AF function of the camera module according to the determination result.

An operating method of an electronic device according to an embodiment of this document, may include acquiring a first image frame focusing on a first position from a camera module in the electronic device, acquiring a second image frame following the first image frame from the camera module, performing deep learning on the first image frame and the second image frame, determining whether it is necessary to set the focus of the second image frame to a second position different from the first position based on a result of the deep learning, and controlling an AF function of the camera module according to the determination result.

An electronic device according to an embodiment of this document may include a camera module supporting an AF function, and at least one processor electrically connected to the camera module. The at least one processor may obtain a first image frame focusing on a first position from the camera module, obtain a second image frame following the first image frame from the camera module, perform deep learning on the frame and the second image frame, acquiring at least one of body detection information, depth detection information, sky detection information, and moire detection information through the deep learning, obtain a difference value of pixel data included in the first image frame and the pixel data included in the second image frame, determine whether it is necessary to set the focus of the second image frame to a second position different from the first position based on information acquired through the deep learning and the difference value, and control an AF function of the camera module according to the determination result.

### [ Advantageous Effects of Invention]

According to various embodiments of the present disclosure, an electronic device, which performs an auto focus (AF) operation only if it is necessary to change a focus position, may reduce a phenomenon in which a preview image vibrates.

Effects obtainable from the present disclosure are not limited to the above-mentioned effects, and other effects which are not mentioned may be clearly understood by those skilled in the art of the present disclosure through the following descriptions.

### [ Brief Description of Drawings]

FIG. 1 is a block diagram of an electronic device in a network environment according to various embodiments.
FIG. 2 is a block diagram illustrating a camera module according to various embodiments.
FIG. 3 is a block diagram illustrating a hardware configuration of an electronic device for performing an auto focus (AF) function according to an embodiment.
FIG. 4 is a flowchart illustrating operations of an electronic device for performing an AF function according to an embodiment.
FIG. 5 is a flowchart illustrating operations of an electronic device for performing an AF function based on at least a deep learning result according to an embodiment.
FIG. 6A is a flowchart illustrating operations of an electronic device for performing an AF function based on body detection information according to an embodiment.
FIG. 6B illustrates an example of a region of interest of an image acquired in a backlight environment according to an embodiment.
FIG. 6C illustrates an example of a region of interest of an image in which a face size is smaller than a designated size according to an embodiment.
FIG. 7 is a flowchart illustrating operations of an electronic device for performing an AF function based on depth detection information according to an embodiment.
FIG. 8A is a flowchart illustrating operations of an electronic device for performing an AF function based on sky detection information according to an embodiment.
FIG. 8B shows an example of a sky image.
FIG. 9A is a flowchart illustrating operations of an electronic device for performing an AF function based on a difference value of pixel data according to an embodiment.
FIG. 9B illustrates an example of a difference value between a first image frame, a second image frame, and pixel data according to an embodiment.
FIG. 10A is a flowchart illustrating operations of an electronic device for performing an AF function based on moire detection information according to an embodiment.
FIG. 10B illustrates an example of a moiré image.

### [ Mode for Carrying out the Invention]

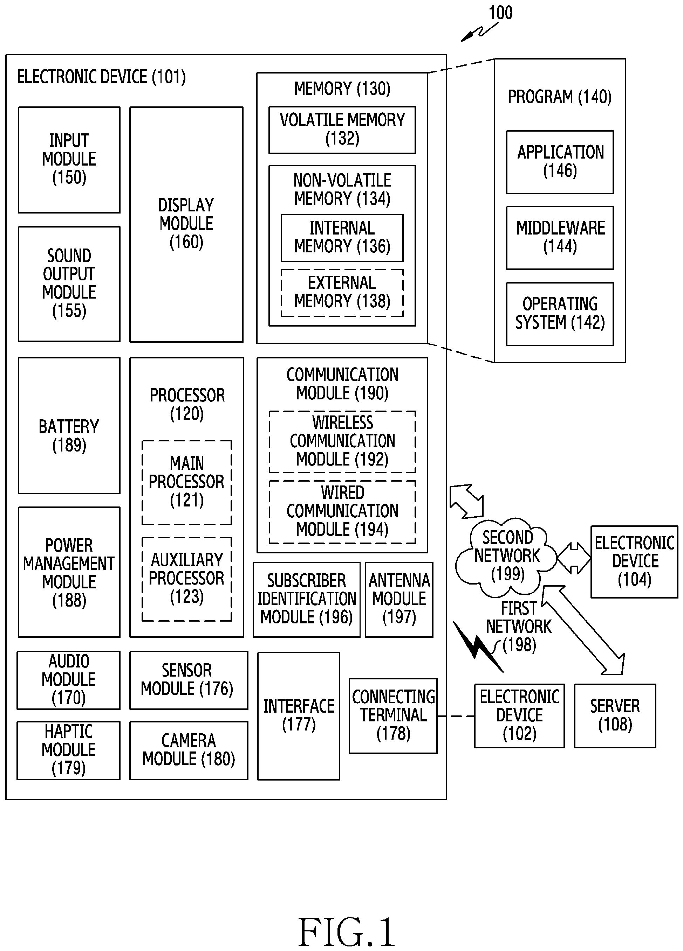

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

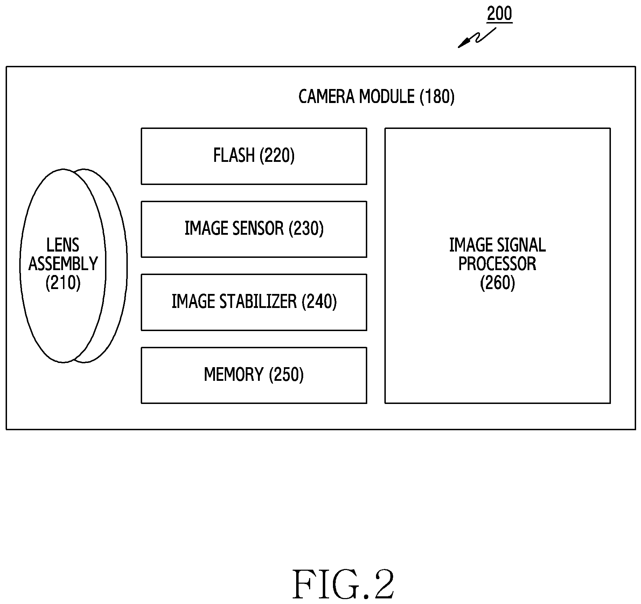

Fig. 2 is a block diagram 200 illustrating the camera module 180 according to various embodiments. Referring to Fig. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

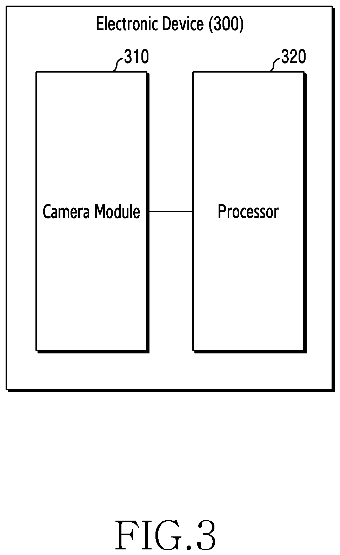

FIG. 3 is a block diagram illustrating a hardware configuration of an electronic 300 device for performing an auto focus (AF) function according to an embodiment.

According to an embodiment, FIG. 3 shows simplified configurations included in the electronic device 300. The electronic device 300 may include identical or similar components to the electronic device 101 described in FIG. 1.

Referring to FIG. 3, the electronic device 300 may include a camera module 310 and a processor 320. According to an embodiment, the camera module 310 may correspond to the camera module 180 of FIG. 1 and FIG. 2. According to an embodiment, the processor 320 may include at least one of the processor 120 shown in FIG. 1, or the image signal processor 260 shown in FIG. 2.

According to an embodiment, the processor 320 may acquire an image frame by controlling the camera module 310. According to an embodiment, the camera module 310 may acquire a first image frame, and acquire a second image frame following the first image frame. In an embodiment, the second image frame following the first image frame may indicate a second image frame acquired successively to the first image frame. For example, if the first image frame is an N-th frame, the second image frame may indicate an N+1-th frame. In another embodiment, the second image frame following the first image frame may indicate at least one image among a plurality of image frames acquired after the first image frame is acquired. For example, if the first image frame is an image frame acquired at a first time point, the second image frame may correspond to any one image frame among a plurality of image frames acquired within a specific time (e.g., 1 second) from the first time point.

According to an embodiment, the camera module 310 may support the AF function. For example, the camera module 310 may support a contrast AF method or a phase AF function. As another example, the camera module 310 may support a hybrid AF method which combines the contrast AF and the phase AF. According to an embodiment, the camera module 310 may acquire the first image frame focusing on a first position while performing the AF function under the control of the processor 320. For example, the first position may indicate a relative position (e.g., distance) of a subject from the electronic device 300 included in the first image frame. According to an embodiment, the camera module 310 may provide the first image frame to the processor 320.

According to an embodiment, the processor 320 may be understood to include at least one processor. For example, the processor 320 may include at least one of an application processor (AP), an image signal processor 260, and a communication processor (CP).

According to an embodiment, the processor 320 may obtain the first image frame focusing on the first position from the camera module 310. According to an embodiment, the processor 320 may acquire the second image frame following the first image frame from the camera module 310.

According to an embodiment, the processor 320 may perform deep learning on the image frames obtained from the camera module 310. According to an embodiment, the processor 320 may determine through the deep learning whether the image frame corresponds to a designated scene.

According to an embodiment, the processor 320 may determine whether it is necessary to set the focus of the second image frame to a second position different from the first position based on a result of the deep learning. According to an embodiment, the processor 320 may control the AF function of the camera module 310 according to the determination result.

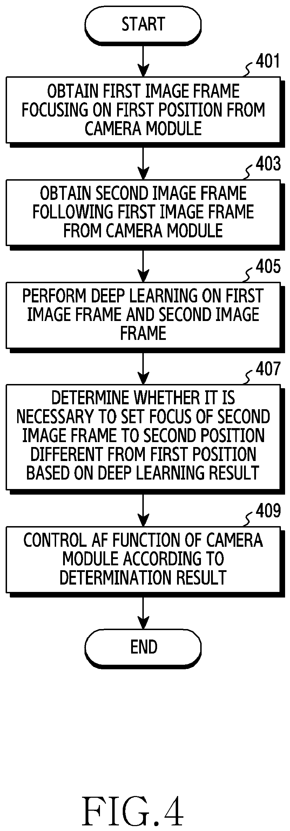

FIG. 4 is a flowchart illustrating operations of an electronic device 300 for performing an AF function according to an embodiment.

According to an embodiment, in operation 401, the processor 320 may obtain a first image frame focusing on a first position from the camera module 310. For example, the processor 320 may execute an application supporting the photographing function of the camera module 310, and automatically focus on the first position if the photographing function is activated. In another example, the processor 320 may display a real-time image acquired by the camera module 310 as a preview on a display of the electronic device 300, and focus on the first position in response to a user input for the preview.

According to an embodiment, the camera module 310 may acquire the first image frame focusing on the first position through the AF function. The camera module 310 may provide the first image frame to the processor 320.

According to an embodiment, in operation 403, the processor 320 may obtain a second image frame following the first image frame from the camera module 310. For example, while acquiring (or after acquiring) the first image frame focusing on the first position, an event in which illumination change such as lighting ON/OFF occurs, place movement between indoors and outdoors occurs, or a camera direction of the electronic device 300 changes may occur. Based on an event occurrence time, the first image frame may be acquired before the event occurrence, and the second image frame may be acquired after the event occurrence. As another example, no significant environmental change may occur between the acquisitions of the first image frame and the second image frame.

According to an embodiment, the second image frame following the first image frame may be understood to indicate at least one image frame among a plurality of image frames acquired after the first position is focused.

According to an embodiment, in operation 405, the processor 320 may perform the deep learning on the first image frame and the second image frame.

According to an embodiment, the processor 320 may acquire at least one of body detection information, depth detection information, sky detection information, and moiré detection information detected from the image frames through the deep learning.

According to an embodiment, in operation 407, the processor 320 may determine whether it is necessary to set the focus of the second image frame to a second position different from the first position based on the result of the deep learning.

According to an embodiment, the processor 320 may determine whether to change the focus of the second image frame to a position different from the first position. For example, if brightness of the second image frame changes compared to brightness of the first image frame but the position of the subject included in the first image frame and the position of the subject included in the second image frame do not change, the processor 320 may determine not to change the focus of the second image frame. As another example, if the position of the subject included in the second image frame (e.g., the distance between the subject and the electronic device 300) is changed compared to the subject included in the first image frame, the processor 320 may determine to change the focus of the second image frame.

According to an embodiment, the processor 320 may determine the second position based on the result of the deep learning. For example, if determining that the second image frame is an image of the sky according to the deep learning result, the processor 320 may determine to focus on an infinity position. According to an embodiment, the processor 320 may determine whether to set the focus of the second image frame to the second position based on the second position determined according to the deep learning result.

According to an embodiment, the processor 320 may compare pixel data included in the first image frame with pixel data included in the second image frame. According to an embodiment, the processor 320 may determine whether to set the focus of the second image frame to the second position based on a difference value of the two pixel data together with the deep learning result.

According to an embodiment, the processor 320 may determine whether to change the focus of the second image frame based on at least one data of contrast data, phase data, illuminance data around the electronic device 300, or motion data acquired through a gyro sensor together with the deep learning result.

According to an embodiment, in operation 409, the processor 320 may control the AF function of the camera module according to the determination result.

According to an embodiment, the processor 320 may maintain the focus on the first position in response to determining that it is not necessary to set the focus of the second image frame at the second position. The processor 320 may acquire from the camera module 310 a third image frame following the second image frame and focusing on the first position.

According to an embodiment, in response to determining to set the focus of the second image frame at the second position, the processor 320 may focus on the second position. The processor 320 may acquire from the camera module 310 a third image frame following the second image frame and focusing on the second position.

According to an embodiment, to focus on the second position, the processor 320 may control the camera module 310 to move a lens included in the camera module 310 (e.g., at least one lens included in the lens assembly 210 of FIG. 2) to a specific point. For example, the processor 320 may detect a point (e.g., a first point) of the current lens through a Hall sensor included in the camera module 310. The processor 320 may compare the current camera point (e.g., the first point) and a camera movement point (e.g., a second point). If there is a difference between the first point and the second point, the processor 320 may move the lens to the second point through a lens actuator included in the camera module 310. The processor 320 may repeat the above operations until the first point and the second point match. The processor 320 may determine that the AF operation is completed if the first point and the second point coincide. After the AF operation is finished, the processor 320 may acquire the third image frame focusing on the second position through the lens located at the second position.

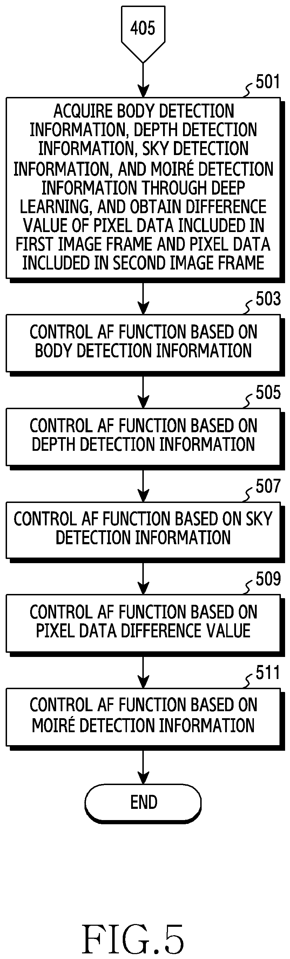

FIG. 5 is a flowchart illustrating operations of an electronic device 300 for performing an AF function based on at least a deep learning result according to an embodiment.

According to an embodiment, in operation 501, the processor 320 may acquire at least one of body detection information, depth detection information, sky detection information, and moiré detection information through the deep learning. The processor 320 may compare pixel data included in a first image frame with pixel data included in a second image frame and thus obtain a difference value of the pixel data.

According to an embodiment, the processor 320 may detect at least one of body, depth, sky, or moiré in the first image frame and the second image frame through the deep learning.

According to an embodiment, the processor 320 may use image segmentation information to perform the deep learning. For example, the image segmentation information may include location information of a region corresponding to a person in the second image frame. As another example, the image segmentation information may include location information of a region corresponding to the closest subject in the second image frame.

According to an embodiment, the processor 320 may obtain the pixel data difference value between the first image data and the second image data. According to an embodiment, the processor 320 may differentiate the pixel data included in the first image frame and the pixel data included in the second image frame, and obtain the difference value of the pixel data based on an absolute value of the differential value. For example, the processor 320 may obtain the difference value based on raw data of the first image frame and raw data of the second image frame.

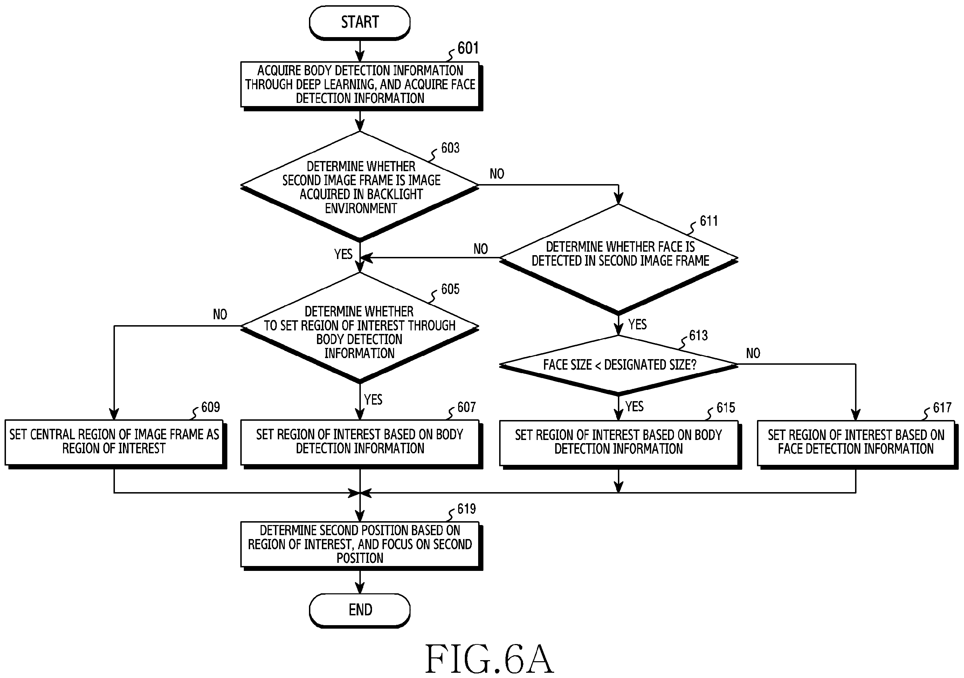

According to an embodiment, in operation 503, the processor 320 may control the AF function based on the body detection information. The AF function based on the body detection information shall be described with reference to FIG. 6A through FIG. 6C.

According to an embodiment, in operation 505, the processor 320 may control the AF function based on the depth detection information.

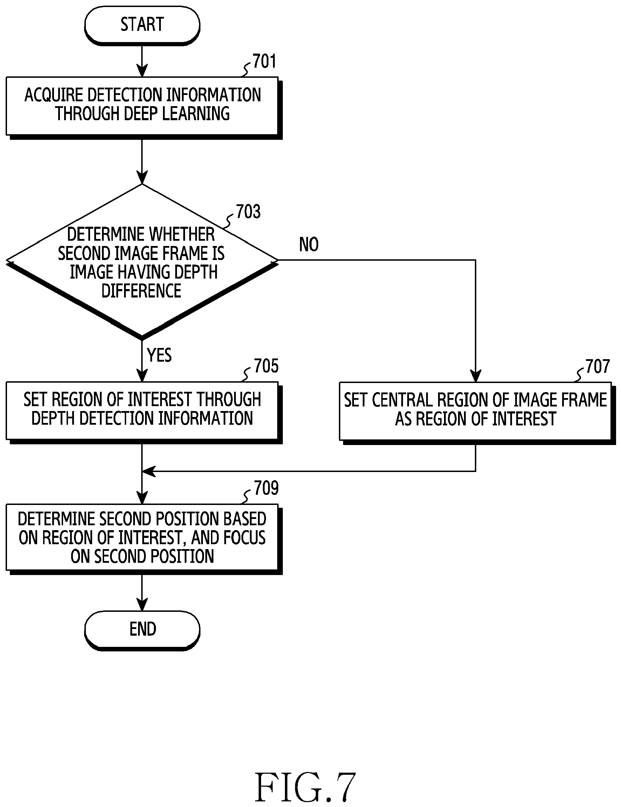

According to an embodiment, if it is difficult to control the AF function based on the body detection information, or to supplement the AF function based on the body detection information, the processor 320 may control the AF function based on the depth detection information. For example, the case where it is difficult to control the AF function based on the body detection information may include a case where the body detection information is not obtained through the deep learning, or a case where the body detection information is obtained but the AF function is hardly controlled based on the body detection information. The AF function based on the depth detection information will be described with reference to FIG. 7.

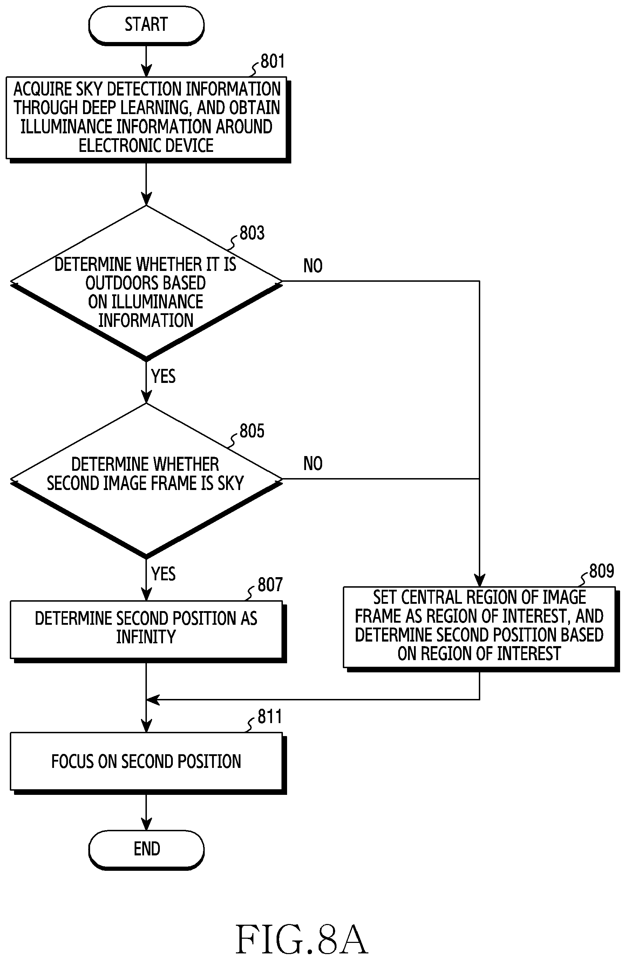

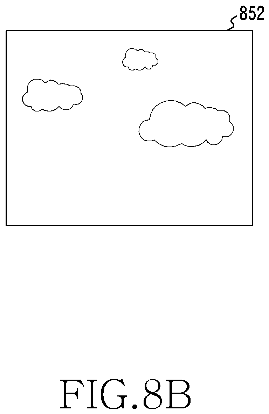

According to an embodiment, in operation 507, the processor 320 may control the AF function based on the sky detection information. The AF function based on the sky detection information shall be described with reference to FIG. 8A and FIG. 8B.

According to an embodiment, in operation 509, the processor 320 may control the AF function based on the pixel data difference value.

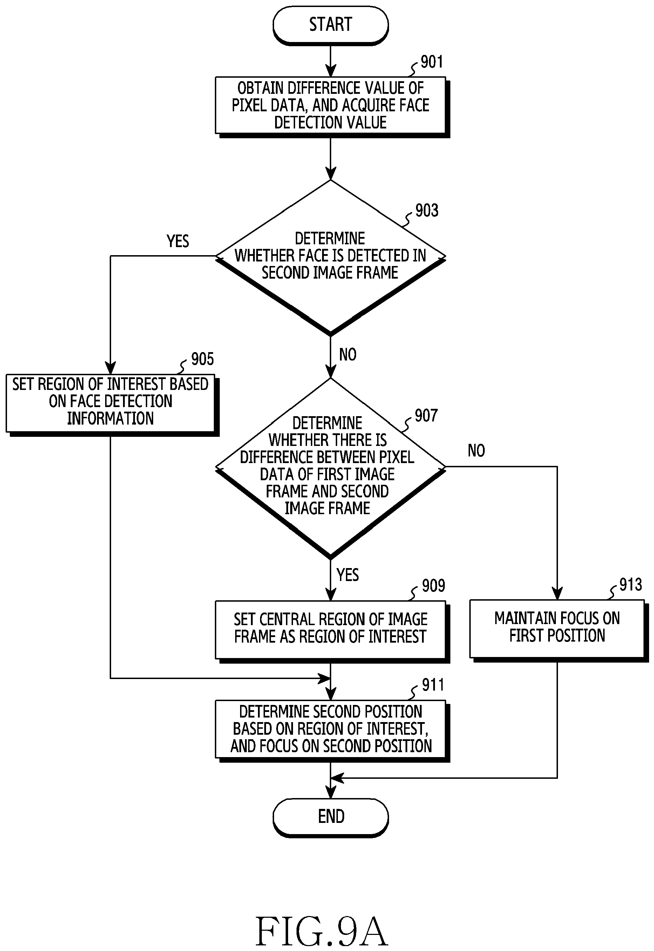

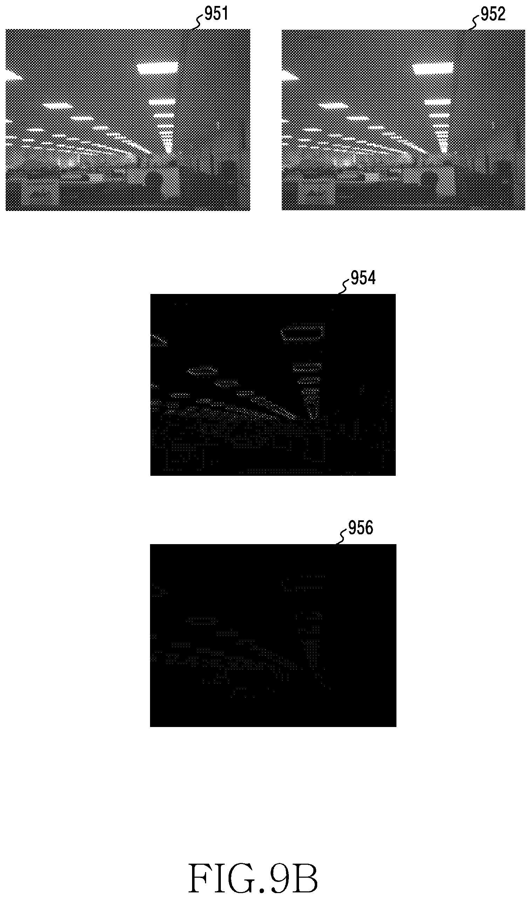

According to an embodiment, if it is difficult to control the AF function based on the sky detection information, the processor 320 may control the AF function based on the difference value of the pixel data. For example, the case where it is difficult to control the AF function based on the sky detection information may include a case where the sky detection information is not obtained through the deep learning, or a case where the sky detection information is obtained but the AF function is hardly controlled based on the sky detection information. The AF function based on the pixel data difference value shall be described with reference to FIG. 9A and FIG. 9B.

According to an embodiment, in operation 511, the processor 320 may control the AF function based on the moiré detection information.

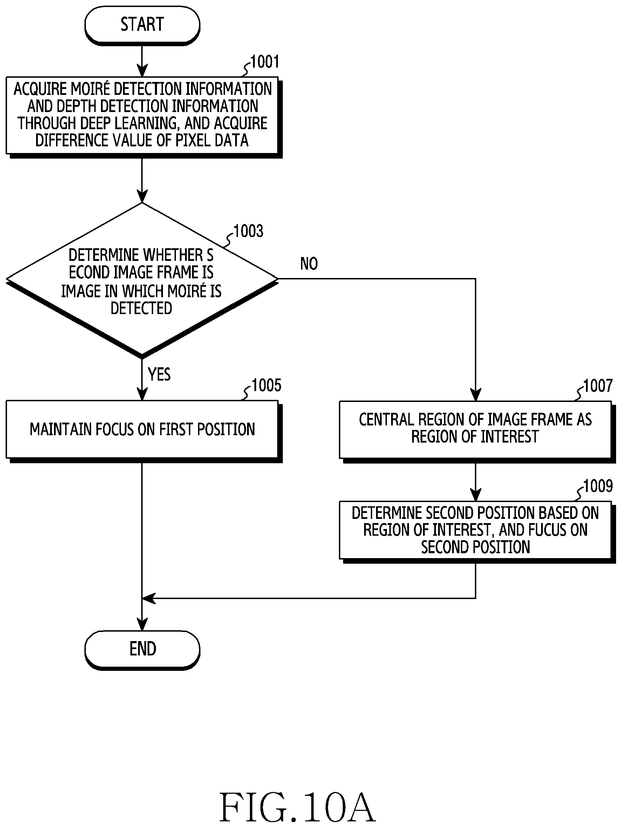

According to an embodiment, if the difference value of the pixel data is greater than or equal to a designated value, the processor 320 may control the AF function based on the moiré detection information. For example, the processor 320 may obtain the pixel data difference value for each pixel, and obtain a ratio of pixels having the difference value greater than a threshold value among the whole pixels included in the image frame. If the ratio is equal to or greater than a specific ratio, the processor 320 may determine that the pixel data difference value is greater than or equal to the designated value. The AF function based on the moiré detection information shall be described with reference to FIG. 10A through FIG. 10B.

Operation 503 through operation 511 may be performed in sequence, but in various embodiments, at least one of operation 503 through operation 511 may be selectively or parallelly performed based on the result of operation 501.

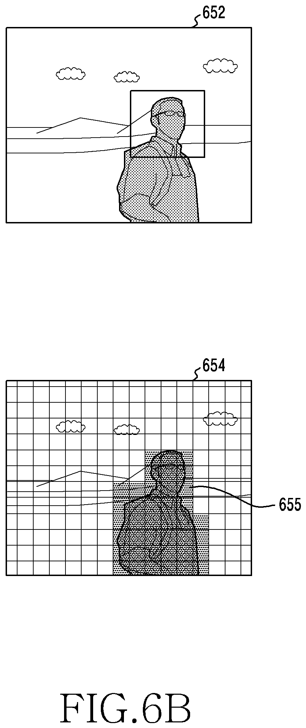

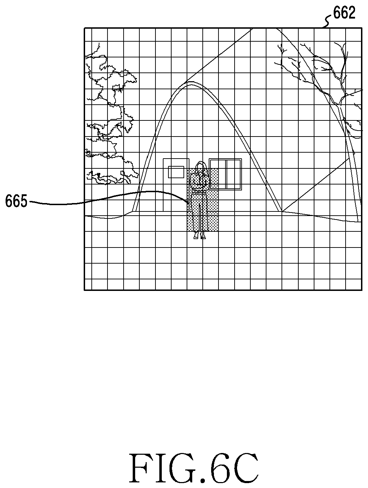

FIG. 6A is a flowchart illustrating operations of an electronic device 300 for performing an AF function based on body detection information according to an embodiment. FIG. 6B illustrates an example of a region of interest of an image acquired in a backlight environment according to an embodiment. FIG. 6C illustrates an example of a region of interest of an image in which a face size is smaller than a designated size according to an embodiment. The operations described with reference to FIG. 6A through FIG. 6C may be understood as specific operations in which the processor 320 controls the AF function based on the body detection information in operation 503 of FIG. 5.

According to an embodiment, in operation 601, the processor 320 may acquire body detection information through the deep learning on a first image frame and a second image frame. Additionally or alternatively, the processor 320 may obtain face detection information from the first image frame and the second image frame.

According to an embodiment, the processor 320 may acquire body detection information by performing the deep learning on at least one of the first image frame or the second image frame. In an embodiment, if the processor 320 fails to obtain the body detection information in at least one of the first image frame and the second image frame, the processor 320 may control the AF function of the camera module 310 in operation 505 of FIG. 5 or through a process to be described in FIG. 7.

According to an embodiment, the processor 320 may acquire the body detection information by perform the deep learning on an image frame capturing the same scene as the second image frame among a plurality of image frames acquired through the camera module 310. For example, if the scene of the image frame is not changed, the processor 320 may perform the deep learning on an image frame acquired before the first image frame.

According to an embodiment, the processor 320 may perform face detection on the first image frame and the second image frame. The processor 320 may obtain the face detection information from at least one of the first image frame and the second image frame. For example, the face detection information may include presence or absence information of the face included in the image frame, position and size information of a region corresponding to the face in the image frame if the face is detected in the image frame, or information of whether the face included in the image frame corresponds to a specific face prestored in the electronic device 300.

According to an embodiment, in operation 603, the processor 320 may determine whether the second image frame is an image acquired in a backlight environment.

According to an embodiment, the processor 320 may determine whether the second image frame is an image obtained in the backlight environment based on brightness information of the second image frame. According to an embodiment, the processor 320 may determine whether the second image frame is an image acquired in the backlight environment through illuminance information around the electronic device 300 acquired through an illuminance sensor included in the electronic device 300.

According to an embodiment, in operation 605, the processor 320 may determine whether to set a region of interest through the body detection information, in response to determining that the second image frame is the image obtained in the backlight environment.

Referring to FIG. 6B, a reference numeral 652 shows an example of an image frame acquired in the backlight environment. According to an embodiment, if the second image frame is the image obtained in the backlight environment, the processor 320 may not detect a face using the face detection function, or even if the processor 320 detects the face, the result may be inaccurate. Accordingly, if determining that the second image frame is the image acquired in the backlight environment, the processor 320 may control the AF function through the body detection information.

According to an embodiment, in operation 607, in response to determining to set the region of interest through the body detection information, the processor 320 may set the region of interest based on the body detection information.

According to an embodiment, the processor 320 may set at least a part of the image frame as the region of interest based on the body detection information. For example, the processor 320 may determine a position and a size of the region corresponding to the body in the second image frame through the body detection information. The processor 320 may set the region of interest including at least the region corresponding to the body in the second image frame.

According to an embodiment, an image of a reference numeral 654 shown in FIG. 6B shows an example of a region of interest 655 which is set based on the body detection information. The body detection information acquired by the processor 320 through the deep learning may include the position and size information of the region corresponding to the body in the second image frame. The processor 320 may set a region corresponding to the body in the second image frame as the region of interest 655. For example, the processor 320 may perform the deep learning on a plurality of regions defined using the image segmentation, and designate regions determined to be the body as the region of interest 655.

According to an embodiment, the processor 320 may set the region of interest based on the body detection information even if the subject included in the second image frame is a side of a person. The processor 320 may detect a region corresponding to the side of the person through the deep learning, and set the detected region as the region of interest.

According to an embodiment, in operation 609, the processor 320 may set a central region of the image frame as the region of interest, in response to determining that the region of interest may not be set through the body detection information. For example, if reliability of the region of interest estimated through the body detection information is lower than a designated value, the processor 320 may determine that the region of interest may not be set through the body detection information.

According to an embodiment, the processor 320 may determine that the region of interest may not be set in the second image frame using the body detection information acquired through the deep learning. For example, if the processor 320 may detect no body in the second image frame through the deep learning or if the body detected in the second image frame is smaller than a designated size, the processor 320 may determine that the region of interest may not be set using the body detection information.

According to an embodiment, if determining that the region of interest may not be set through the body detection information, the processor 320 may set the central region of the image frame as the region of interest. According to an embodiment, setting the central region of the image frame as the region of interest is an example of the general AF operation, and the processor 320 may set the whole image frame region, rather than the central region of the image frame, as the region of interest, and may set a region away from the central region by a specific distance as the region of interest. According to an embodiment, if determining that the region of interest may not be set through the body detection information, the processor 320 may control the camera module 310 to perform the AF operation based on the depth detection information.

According to an embodiment, in response to determining that the second image frame is not the image obtained in the backlight environment, the processor 320 may determine whether a face is detected in the second image frame, in operation 611.

According to an embodiment, if the second image frame is not the image obtained in the backlight environment, the processor 320 may determine whether a face is included in the second image frame through the face detection information obtained in operation 601.

According to an embodiment, in operation 613, the processor 320 may determine whether the size of the face is smaller than a designated size, in response to detecting the face in the second image frame.

According to an embodiment, in response to detecting no face in the second image frame, the processor 320 may determine whether a region of interest may be set through the body detection information in operation 605. According to an embodiment, if the processor 320 determines that no face is detected in the second image frame, the processor 320, which may not use the face detection information, may control the AF function through the body detection information.

According to an embodiment, in operation 615, the processor 320 may set the region of interest based on the body detection information, in response to the size of the face detected in the second image frame being smaller than the designated size.

According to an embodiment, if the size of the face included in the second image frame is smaller than the designated size, the processor 320 may not or may hardly control the AF function based on the face detection information. For example, if the processor 320 sets the region of interest based on the face size smaller than the designated size, the corresponding region of interest may include other subject than the face. If the processor 320 controls the AF function based on the region corresponding to the face and the other subject, the subject rather than the face may be focused. Hence, if the size of the face included in the second image frame is smaller than the designated size, the processor 320 may set the region of interest based on the body detection information through the deep learning.

According to an embodiment, a reference numeral 662 shown in FIG. 6C shows an example of a region of interest 665 which is set if the size of the face included in the second image frame is smaller than the designated size. According to an embodiment, in relation to operation 603, the processor 320 may determine that the image 662 is not an image acquired in the backlight environment. In relation to operation 611, the processor 320 may determine that the face is detected in the image of the reference numeral 662. In relation to operation 613, the processor 320 may determine that the size of the face detected in the image of the reference numeral 662 is smaller than the designated size. In relation to operation 615, the processor 320 may set the region of interest 665 based on the body detection information. Referring to FIG. 6C, the processor 320 may obtain the position and size information of the body included in the image frame through the deep learning, and set the region corresponding to the body as the region of interest 665.

According to an embodiment, in operation 617, the processor 320 may set the region of interest based on the face detection information, in response to the face size greater than the designated size.

According to an embodiment, if the size of the face included in the second image frame is greater than the designated size, the processor 320 may set the region corresponding to the face included in the face detection information in the second image frame as the region of interest.

According to an embodiment, in operation 619, the processor 320 may determine a second position based on the region of interest set in operation 607, operation 609, operation 615, or operation 617. The processor 320 may control the camera module 310 to focus on the determined second position.

According to an embodiment, the processor 320 may acquire contrast data or phase data from at least a partial region of the image frame, and perform the AF function based on the acquired contrast data (or, phase data). For example, if the position of the subject included in the at least partial region changes and the contrast data (or phase data) is changed, the processor 320 may change the focus position. According to an embodiment, at least a partial region of the image frame set to perform the AF function may be referred to as the region of interest (e.g., the region of interest set in operation 607, operation 609, operation 615, or operation 617).

According to an embodiment, the processor 320 may determine the second position based on the region of interest. The processor 320 may determine the second position based on the contrast data (or, the phase data) obtained from the region of interest in the second image frame. For example, the second position may be different from the first position.

According to an embodiment, the processor 320 may control the camera module 310 to move the lens included in the camera module 310 to a specific point to focus on the second position determined based on the region of interest. For example, the processor 320 may compare a current lens position (e.g., a first point) and a position for the lens movement (e.g., a second point), and move the lens until the first point and the second point match.

According to an embodiment, the second position determined by the processor 320 based on the region of interest may coincide with the first position focused in the first image frame. If the second position determined based on at least the body detection information matches the first position, the processor 320 may determine that there is no need to change the focus of the second image frame. If determining not to change the focus of the second image frame, the processor 320 may maintain the focus at the first position.

FIG. 7 is a flowchart illustrating operations of an electronic device 300 for performing an AF function based on depth detection information according to an embodiment. The operations described in relation to FIG. 7 may be understood as detailed operations of the processor 320 for controlling the AF function based on the depth detection information in operation 505 of FIG. 5.

According to an embodiment, in operation 701, the processor 320 may acquire the detection information through the deep learning on at least one of the first image frame and the second image frame.

According to an embodiment, the depth detection information through the deep learning may be understood to indicate a depth map. According to an embodiment, the processor 320 may acquire the depth detection information by performing the deep learning on the first image frame and the second image frame acquired through the camera module 310. According to an embodiment, the processor 320 may acquire the depth detection information by performing the deep learning on an image frame capturing the same scene as the second image frame among a plurality of image frames acquired through the camera module 310. For example, if the scene of the image frame is not changed, the processor 320 may perform the deep learning on an image frame acquired before the first image frame.

According to an embodiment, in operation 703, the processor 320 may determine whether the second image frame is an image having a depth difference.

According to an embodiment, the image having the depth difference may be understood as an image including a plurality of subjects having different distances between the subject and the background of the electronic device 300. According to an embodiment, the image having the depth difference may be understood to indicate an image in which the greatest value and the smallest value of the distances between the subject and the background and the electronic device 300 are greater than a designated value. For example, if a first subject and a second subject have a distance difference greater than or equal to a designated value, or if the first subject and the background have a distance difference greater than or equal to a designated value, the image including such subject/background may be understood as the image having the depth difference.

According to an embodiment, the processor 320 may determine whether the second image frame is the image having the depth difference through the depth detection information acquired through the deep learning. According to an embodiment, the processor 320 may determine whether the second image frame is the image having the depth difference by using distance data acquired through a distance sensor of the electronic device 300, together with the depth detection information.

According to an embodiment, the processor 320 may determine whether at least a partial region of the second image frame has a depth difference. For example, the processor 320 may determine whether a first region of interest has a depth difference, based on a region of interest (e.g., the first region of interest) set before determining whether the second image frame is the image having the depth difference.

According to an embodiment, in operation 705, in response to determining that the second image frame is the image having the depth difference, the processor 320 may set a region of interest based on the depth detection information.

According to an embodiment, the processor 320 may set a region corresponding to a subject positioned closest to the electronic device 300 among subjects included in the second image frame as the region of interest based on the depth detection information.

According to an embodiment, if there is the region of interest (e.g., the first region of interest) set before the processor 320 determines whether the second image frame is the image having the depth difference, the processor 320 may reset a region of interest (e.g., a second region of interest) based on the depth detection information.

According to an embodiment, in operation 707, the processor 320 may set the central region of the image frame as the region of interest, in response to determining that the second image frame is not the image having the depth difference. According to an embodiment, in response to determining that the second image frame is not the image having the depth difference, the processor 320 may control the AF function of the camera module 310 through operation 507 of FIG. 5 or a process to be described in FIG. 8A.

According to an embodiment, in operation 709, the processor 320 may determine a second position based on the region of interest set in operation 705, or operation 707. The processor 320 may control the camera module 310 to focus on the determined second position.

According to an embodiment, the processor 320 may use a distance value included in the depth detection information, to determine the second position based on the set region of interest. For example, if the depth detection information includes information that the distance between the subject included in the region of interest and the electronic device 300 is 1 m, the processor 320 may determine the second position as 1 m.

FIG. 8A is a flowchart illustrating operations of an electronic device 300 for performing an AF function based on sky detection information according to an embodiment. FIG. 8B shows an example of a sky image. The operations described with reference to FIG. 8A and FIG. 8B may be understood as detailed operations in which the processor 320 controls the AF function based on the sky detection information in operation 507 of FIG. 5.

According to an embodiment, in operation 801, the processor 320 may acquire the sky detection information through the deep learning on at least one of the first image frame and the second image frame. According to an embodiment, the processor 320 may acquire the sky detection information by performing the deep learning on the image frame capturing the same scene as the second image frame among the plurality of the image frames acquired through the camera module 310. In addition, the processor 320 may obtain illuminance information around the electronic device 300 through the illuminance sensor.

In an embodiment, if the processor 320 acquires no sky detection information through the deep learning, or acquires the sky detection information but hardly controls the AF function based on the sky detection information, the processor 320 may control the AF function of the camera module 310 through operation 505 of FIG. 5 or a process to be described in FIG. 7. For example, if the second image frame is a photograph in which a sky image is printed or an image frame acquired by capturing the sky displayed on a monitor display, it may correspond to a case where the processor 320 obtains the sky detection information from the second image frame but hardly controls the AF function based on the sky detection information.

According to an embodiment, in operation 803, the processor 320 may determine whether the second image frame is acquired outdoors based on the illuminance information.

According to an embodiment, the processor 320 may detect the sky as a result of the deep learning even if the scene of the second image frame does not correspond to the sky. For example, if the second image frame is a wall image in a color similar to the sky, the processor 320 may determine that the sky is detected as the result of the deep learning. Hence, the processor 320 may determine whether the second image frame is an image acquired outdoors by using the illuminance information acquired through the illuminance sensor. Herein, the outdoor may include a case in which the electronic device 300 is actually located outdoors and a case in which the electronic device 300 captures the outdoor sky through a window or the like.

According to an embodiment, in operation 805, the processor 320 may determine whether the second image frame is the sky, in response to determining that the second image frame is acquired outdoors. In addition, the processor 320 may determine whether the second image frame is the image capturing the actual sky or an image or a subject similar to the sky by using additional information obtained through the distance sensor.

According to an embodiment, in operation 807, the processor 320 may focus on the second position corresponding to infinity in response to determining that the scene of the second image frame is the sky.

According to an embodiment, if determining that the second image frame is the scene corresponding to the sky, the processor 320 may determine to set the focus to infinity. An electronic device according to the related art acquires image frames while moving its lens to determine whether the image is a sky image. Unlike the related art, the processor 320 according to an embodiment may determine that the second image frame is the image corresponding to the sky using the deep learning result. Hence, the electronic device 300 may reduce vibrating the preview image displayed on the display (e.g., the display module 160 of FIG. 1) as the lens moves more than necessary.

Referring to FIG. 8B, a reference numeral 852 shows an example of the image corresponding to the sky. In relation to operation 803, the processor 320 may determine that the image of the reference numeral 852 is the image acquired outdoors. In relation to operation 805, the processor 320 may determine that the image of the reference numeral 852 is the image corresponding to the sky. In relation to operation 807, the processor 320 may determine to set the focus of the image of the reference numeral 852 to infinity.

According to an embodiment, in operation 809, in response to at least one of determining that the second image frame is not acquired outdoors, or determining that the scene of the second image frame is not the sky, the processor 320 may set the central region of the image frame as the region of interest, and determine the second position based on the region of interest.

According to an embodiment, the processor 320 may determine that the second image frame is an image acquired indoors based on the illuminance data acquired through the illuminance sensor. For example, if the second image frame is a wall image captured indoors, the processor 320 may determine that the second image frame is not acquired outdoors based on the illuminance data.

According to an embodiment, the processor 320 may determine that the second image frame does not correspond to the sky even if it is the image captured outdoors. For example, if the second image frame is a wall image captured outdoors, the processor 320 may determine that the second image frame is not the sky image based on the sky detection information.

According to an embodiment, the processor 320 may set the central region of the image frame as the region of interest, and determine the second position based on a subject included in the region of interest. According to an embodiment, if determining that the second image frame corresponds to a wall image, the processor 320 may determine the second position as 2 m through 3 m. According to an embodiment, in response to determining that the second image frame is not the image corresponding to the sky, the processor 320 may control the AF function of the camera module 310 through operation 509 of FIG. 5 or a process to be described in FIG. 9A.

According to an embodiment, in operation 811, the processor 320 may control the camera module 310 to focus on the second position determined in operation 807, or operation 809.

FIG. 9A is a flowchart illustrating operations of an electronic device 300 for performing an AF function based on a difference value of pixel data according to an embodiment. FIG. 9B illustrates an example of a first image frame, a second image frame, and a difference value of pixel data between the first image frame and the second image frame according to an embodiment. The operations described with reference to FIG. 9A and FIG. 9B may be understood as detailed operations in which the processor 320 controls the AF function based on the pixel data difference value in operation 509 of FIG. 5.

According to an embodiment, in operation 901, the processor 320 may obtain the difference value between the pixel data included in the first image frame and the pixel data included in the second image frame. Also, the processor 320 may obtain face detection information from the first image frame and the second image frame.

According to an embodiment, in operation 903, the processor 320 may determine whether a face is detected in the second image frame.

According to an embodiment, the processor 320 may obtain face detection information by performing a face detection function on at least one of the first image frame or the second image frame. The processor 320 may determine whether a face is included in the second image frame based on the face detection information.

According to an embodiment, in operation 905, the processor 320 may set a region of interest based on the face detection information, in response to detecting the face in the second image frame.

According to an embodiment, if detecting the face in the second image frame, the processor 320 may control the AF function based on the face detection information. According to an embodiment, if detecting the face in the second image frame, the processor 320 may not use information of the pixel data difference value.

According to an embodiment, in operation 907, the processor 320 may determine whether there is a difference between the pixel data of the first image frame and the second image frame, in response to detecting no face in the second image frame.

According to an embodiment, in operation 909, in response to determining the difference between the pixel data of the first image frame and the second image frame, the processor 320 may set the central region of the image frame as the region of interest.

According to an embodiment, if determining the difference between the pixel data of the first image frame and the second image frame, the processor 320 may determine that a subject position included in the first image frame and a subject position included in the second image frame are changed. For example, the processor 320 may detect a local motion of the subject or a global motion of the electronic device 300 using the difference value of the pixel data.

According to an embodiment, if there is the pixel data difference between the first image frame and the second image frame, the processor 320 may determine to change the focus of the second image frame. The processor 320 may determine a position to change the focus of the second image frame by setting the central region of the image frame as the region of interest. According to an embodiment, in response to determining the difference between the pixel data included in the first image frame and the pixel data included in the second image frame, the processor 320 may control the AF function of the camera module 310 through operation 511 of FIG. 5 or a process to be described in FIG. 10A.

According to an embodiment, in operation 911, the processor 320 may determine the second position based on the region of interest set in operation 909. The processor 320 may control the camera module 310 to focus on the determined second position.

According to an embodiment, if detecting the face in the second image frame, the processor 320 may determine the second position based on the region of interest set based on the face detection information in operation 905. If there is a significant difference between the pixel data of the first image frame and the second image frame, the processor 320 may determine the second position based on the region of interest set in operation 909.

According to an embodiment, in operation 913, the processor 320 may maintain the focus at the first position, in response to determining no difference between the pixel data of the first image frame and the second image frame.

According to an embodiment, the processor 320 may determine no difference as a result of comparing the pixel data included in the first image frame and the pixel data included in the second image frame. For example, if the pixel data difference value satisfies a designated condition, the processor 320 may determine no difference between the pixel data of the first image frame and the pixel data of the second image frame. For example, if the difference value of the pixel data is 0 or is not 0 but falls within a designated range of a negligible level, the processor 320 may determine no difference between the pixel data of the first image frame and the pixel data of the second image frame. For example, the processor 320 may obtain the difference value of the pixel data for each pixel included in the first image frame and the second image frame, and determine whether the pixel data difference value for each pixel is less than or equal to a threshold value. The processor 320 may obtain a ratio of pixels having the difference value equal to or less than the threshold value among all the pixels included in the image frame. If the ratio is less than a specific ratio, the processor 320 may determine no difference value of the pixel data. In an embodiment, if there is no significant difference in the pixel data, the processor 320 may maintain the focus on the first image frame without changing the focus of the second image frame.

FIG. 9B shows an example of a first image frame 951 and a second image frame 952. An image of a reference numeral 954 shows an example of an image corresponding to a difference value of pixel data included in the first image frame 951 and pixel data included in the second image frame 952. Also, an image of a reference numeral 956 shows an example of an image in which the difference value of the pixel data is set to 0 if the pixel data difference value obtained for each pixel in the image of the reference numeral 954 is equal to or less than a threshold value.

According to an embodiment, the processor 320 may differentiate the pixel data included in the first image frame 951 and the pixel data included in the second image frame 952, and acquire the image of the reference numeral 954 based on an absolute value of the differential value. According to an embodiment, the processor 320 may remove noises included in the first image frame 951 and the second image frame 952, and acquire the differential value based on the first image frame 951 and the second image frame 952 with the noises removed. Even if there is no need to change the focus of the second image frame (e.g., if there is no motion of the subject), the processor 320 may remove the noises in the first image frame 951 and the second image frame 952, to prevent from determining the pixel data difference due to the noise included in the first image frame 951 or the second image frame 952. For example, the processor 320 may apply a Gaussian filter to the first image frame 951 and the second image frame 952. The operation in which the processor 320 acquires the difference value of the pixel data based on the first image frame 951 and the second image frame 952 to which the Gaussian filter is applied may be referred to as a difference of gaussian (DoG).

According to an embodiment, the processor 320 may obtain the image of the reference numeral 956 by setting the difference value to 0 if the pixel data difference value acquired for each pixel in the image of the reference numeral 954 is equal to or less than the threshold value. The processor 320 may determine no pixel data difference value, if the ratio of the pixels having the pixel data difference value of 0 among all the pixels in the image of the reference numeral 956 is less than the specific ratio.

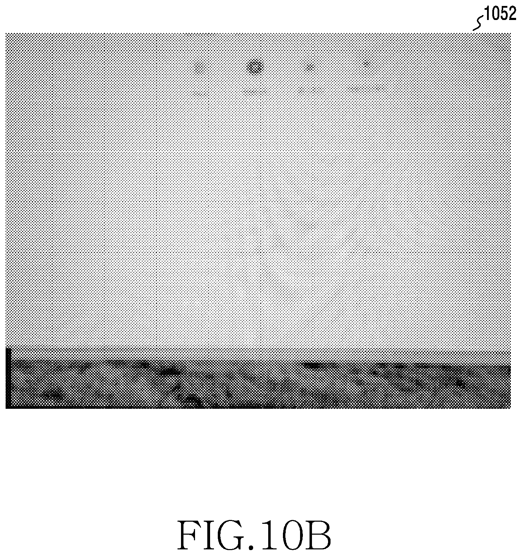

FIG. 10A is a flowchart illustrating operations of an electronic device for performing an AF function based on moiré detection information according to an embodiment. FIG. 10B illustrates an example of a moiré image. The operations described with reference to FIG. 10A and FIG. 10B may be understood as specific operations in which the processor 320 controls the AF function based on the moiré detection information in operation 511 of FIG. 5.

According to an embodiment, in operation 1001, the processor 320 may acquire the moiré detection information, and the depth detection information through the deep learning on at least one of the first image frame and the second image frame. According to an embodiment, the processor 320 may acquire the moiré detection information and the depth detection information by perform the deep learning on the image frame capturing the same scene as the second image frame among the plurality of the image frames acquired through the camera module 310. Also, the processor 320 may obtain the pixel data difference value between the first image frame and the second image frame.

According to an embodiment, in operation 1003, the processor 320 may determine whether the second image frame is an image in which the moiré is detected.

According to an embodiment, the processor 320 may determine whether the moiré is included in the second image frame through the moiré detection information. According to an embodiment, the processor 320 may determine whether the second image frame is an image acquired on a plane through the depth detection information. Since the moiré mostly occurs on a flat subject (e.g., a PC screen), the processor 320 may determine whether the second image frame is a moiré image by using the depth detection information together. According to an embodiment, the processor 320 may determine whether there is the moiré by using the pixel data difference value together. For example, the processor 320 may determine whether there is a subject motion based on the difference value of the pixel data. The processor 320 may consider the pixel data difference value together with a result of the deep learning to determine whether the moiré is detected in the second image frame.

According to an embodiment, in operation 1005, in response to determining that the second image frame is the image in which the moiré is detected, the processor 320 may maintain the focus at the first position.

According to an embodiment, if the second image frame corresponds to the image according to the moiré, a position to be focused in the second image frame may coincide with a first position focused in the first image frame. If determining that the moiré is detected in the second image frame, the processor 320 may maintain the focus of the second image frame at the first position.

Referring to FIG. 10B, a reference numeral 1052 shows an example of an image according to the moiré. In relation to operation 1003, the processor 320 may determine that the image of the reference numeral 1052 is an image in which the moiré is detected. In relation to operation 1005, the processor 320 may determine not to change the focus position of the image of the reference numeral 1052. The processor 320 may maintain the focus of the image of the reference numeral 1052 at the first position.

According to an embodiment, in operation 1007, in response to determining that the second image frame is not the image in which the moiré is detected, the processor 320 may set the central region of the image frame as the region of interest.

According to an embodiment, if the second image frame is not the image according to the moiré, the processor 320 may set the central region of the image frame as the region of interest. According to another embodiment, the processor 320 may set the region of interest based on the depth detection information.

According to an embodiment, in operation 1009, the processor 320 may determine the second position based on the region of interest set in operation 1007. The processor 320 may control the camera module 310 to focus on the determined second position.

An electronic device according to an embodiment of this document may include a camera module supporting an AF function, and at least one processor electrically connected to the camera module. The at least one processor may obtain a first image frame focusing on a first position from the camera module, obtain a second image frame following the first image frame from the camera module, perform deep learning on the first image frame and the second image frame, determine whether it is necessary to set the focus of the second image frame to a second position different from the first position based on a result of the deep learning, and control the AF function of the camera module according to the determination result.

In the electronic device according to an embodiment of this document, the at least one processor may maintain the focus at the first position in response to determining that it is not necessary to set the focus of the second image frame at the second position, and obtains a third image frame following the second image frame and focusing on the first position from the camera module.

In the electronic device according to an embodiment of this document, the at least one processor may focus on the second position in response to determining that it is necessary to set the focus of the second image frame at the second position, and obtain a third image frame following the second image frame and focusing on the second position from the camera module.

In the electronic device according to an embodiment of this document, the deep learning result may include at least one of body detection information, depth detection information, sky detection information, and moiré detection information.

In the electronic device according to an embodiment of this document, the at least one processor may obtain a difference value between pixel data contained in the first image frame and pixel data contained in the second image frame, and determine whether it is necessary to set the focus of the second image frame to the second position based on the difference value together with the deep learning result.

In the electronic device according to an embodiment of this document, the at least one processor may determine the second position based on at least the deep learning result.

In the electronic device according to an embodiment of this document, the at least one processor may set at least a partial region of the second image frame as a region of interest based on at least the deep learning result, and determine the second position based on the region of interest.

In the electronic device according to an embodiment of this document, the at least one processor may determine the second position to infinity if the second image frame corresponds to a designated scene as the result of the deep learning.

An operating method of an electronic device according to an embodiment of this document may include acquiring a first image frame focusing on a first position from a camera module in the electronic device, acquiring a second image frame following the first image frame from the camera module, performing deep learning on the first image frame and the second image frame, determining whether it is necessary to set the focus of the second image frame to a second position different from the first position based on a result of the deep learning, and controlling an AF function of the camera module according to the determination result.

In the operating method of the electronic device according to an embodiment of this document, controlling the AF function may include maintaining the focus at the first position in response to determining that it is not necessary to set the focus of the second image frame at the second position, and acquiring from the camera module a third image frame following the second image frame and focusing on the first position.

In the operating method of the electronic device according to an embodiment of this document, controlling the AF function may include focusing on the second position in response to determining that it is necessary to set the focus of the second image frame to the second position, and acquiring from the camera module a third image frame following the second image frame and focusing on the second position.

In the operating method of the electronic device according to an embodiment of this document, determining whether it is necessary to set the focus of the second image frame to the second position may include determining whether it is necessary to set the focus of the second image frame to the second position based on at least one of body detection information, depth detection information, sky detection information, and moiré detection information acquired by performing the deep learning.

In the operating method of the electronic device according to an embodiment of this document, determining whether it is necessary to set the focus of the second image frame to the second position may include obtaining a difference value of pixel data contained in the first image frame and pixel data contained in the second image frame, and determining whether it is necessary to set the focus of the second image frame to the second position based on the difference value together with the deep learning result.

In the operating method of the electronic device according to an embodiment of this document, determining whether it is necessary to set the focus of the second image frame to the second position may include determining the second position based on at least the deep learning result.

In the operating method of the electronic device according to an embodiment of this document, determining the second position may include setting at least a partial region of the second image frame as a region of interest based on at least the deep learning result, and determining the second position based on the region of interest.

An electronic device according to an embodiment of this document may include a camera module supporting an AF function, and at least one processor electrically connected to the camera module. The at least one processor may obtain a first image frame focusing on a first position from the camera module, obtain a second image frame following the first image frame from the camera module, perform deep learning on the frame and the second image frame, acquiring at least one of body detection information, depth detection information, sky detection information, and moiré detection information through the deep learning, obtain a difference value of pixel data included in the first image frame and the pixel data included in the second image frame, determine whether it is necessary to set the focus of the second image frame to a second position different from the first position based on information acquired through the deep learning and the difference value, and control an AF function of the camera module according to the determination result.

In the electronic device according to an embodiment of this document, the at least one processor may control the AF function of the camera module based on the body detection information, and control the AF function of the camera module based on the depth detection information, in response to not detecting the body detection information in the second image frame.

In the electronic device according to an embodiment of this document, the at least one processor may control the AF function of the camera module based on the depth detection information, and control the AF function of the camera module based on the sky detection information, in response to not detecting the depth detection information in the second image frame.

In the electronic device according to an embodiment of this document, the at least one processor may control the AF function of the camera module based on the sky detection information, and control the AF function of the camera module based on the difference value information, in response to not detecting the sky detection information in the second image frame.

In the electronic device according to an embodiment of this document, the at least one processor may control the AF function of the camera module based on the difference value, and control the AF function of the camera module based on the moiré detection information, in response to the difference value greater than or equal to a designated value in the second image frame.

## Claims

1. An electronic device comprising:
a camera module supporting an auto focus (AF) function; and
at least one processor electrically connected to the camera module,
wherein the at least one processor:
obtains a first image frame focusing on a first position from the camera module,
obtains a second image frame following the first image frame from the camera module,
performs deep learning on the first image frame and the second image frame,
determines whether it is necessary to set the focus of the second image frame to a second position different from the first position based on a result of the deep learning, and
controls the AF function of the camera module according to the determination result.

2. The electronic device of claim 1, wherein the at least one processor:
maintains the focus at the first position in response to determining that it is not necessary to set the focus of the second image frame at the second position, and
obtains a third image frame following the second image frame and focusing on the first position from the camera module.

3. The electronic device of claim 1, wherein the at least one processor:
focuses on the second position in response to determining that it is necessary to set the focus of the second image frame at the second position, and
obtains a third image frame following the second image frame and focusing on the second position from the camera module.

4. The electronic device of claim 1, wherein the deep learning result comprises at least one of body detection information, depth detection information, sky detection information, and moiré detection information.

5. The electronic device of claim 1, wherein the at least one processor:
obtains a difference value between pixel data contained in the first image frame and pixel data contained in the second image frame, and
determines whether it is necessary to set the focus of the second image frame to the second position based on the difference value together with the deep learning result.

6. The electronic device of claim 1, wherein the at least one processor determines the second position based on at least the deep learning result.

7. The electronic device of claim 6, wherein the at least one processor:
sets at least a partial region of the second image frame as a region of interest based on at least the deep learning result, and
determines the second position based on the region of interest.

8. The electronic device of claim 6, wherein the at least one processor determines the second position to infinity if the second image frame corresponds to a designated scene as the result of the deep learning.

9. An operating method of an electronic device, comprising:
acquiring a first image frame focusing on a first position from a camera module in the electronic device;
acquiring a second image frame following the first image frame from the camera module;
performing deep learning on the first image frame and the second image frame;
determining whether it is necessary to set the focus of the second image frame to a second position different from the first position based on a result of the deep learning; and
controlling an auto focus (AF) function of the camera module according to the determination result.

10. The operating method of the electronic device of claim 9, wherein controlling the AF function comprises maintaining the focus at the first position in response to determining that it is not necessary to set the focus of the second image frame at the second position, and
acquiring from the camera module a third image frame following the second image frame and focusing on the first position.

11. The operating method of the electronic device of claim 9, wherein controlling the AF function comprises focusing on the second position in response to determining that it is necessary to set the focus of the second image frame to the second position, and
acquiring from the camera module a third image frame following the second image frame and focusing on the second position.

12. The operating method of the electronic device of claim 9, wherein determining whether it is necessary to set the focus of the second image frame to the second position comprises:
determining whether it is necessary to set the focus of the second image frame to the second position based on at least one of body detection information, depth detection information, sky detection information, and moiré detection information acquired by performing the deep learning.

13. The operating method of the electronic device of claim 9, wherein determining whether it is necessary to set the focus of the second image frame to the second position comprises:
obtaining a difference value of pixel data contained in the first image frame and pixel data contained in the second image frame; and
determining whether it is necessary to set the focus of the second image frame to the second position based on the difference value together with the deep learning result.

14. The operating method of the electronic device of claim 9, wherein determining whether it is necessary to set the focus of the second image frame to the second position comprises:
determining the second position based on at least the deep learning result.

15. The operating method of the electronic device of claim 14, wherein determining the second position comprises:
setting at least a partial region of the second image frame as a region of interest based on at least the deep learning result; and
determining the second position based on the region of interest.
